(19) Europäisches Patentamt
European Patent Office
Office européen des brevets

(11) **EP 4 757 167 A1**

(12) **EUROPÄISCHE PATENTANMELDUNG**

(43) Veröffentlichungstag:
**10.06.2026 Patentblatt 2026/24**

(21) Anmeldenummer: **24217200.5**

(22) Anmeldetag: **03.12.2024**

(51) Internationale Patentklassifikation (IPC):
***H02P 6/32*** *(2016.01)* ***H02P 21/00*** *(2016.01)*
***H02P 21/14*** *(2016.01)* ***H02P 21/22*** *(2016.01)*
***H02P 25/022*** *(2016.01)* ***H02P 29/20*** *(2016.01)*
***B21B 35/08*** *(2006.01)* ***H02K 3/20*** *(2006.01)*
***H02P 9/30*** *(2006.01)*

(52) Gemeinsame Patentklassifikation (CPC):
**H02P 21/141; H02K 3/20; H02P 6/32; H02P 9/305; H02P 21/0021; H02P 21/22; H02P 29/20;**
B21B 35/02; B21B 35/08; H02P 25/022

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Primetals Technologies Germany GmbH**
**91058 Erlangen (DE)**

(72) Erfinder: **Weinzierl, Klaus**
**90480 Nürnberg (DE)**

(74) Vertreter: **Metals@Linz**
**Primetals Technologies Austria GmbH**
**Intellectual Property Upstream IP UP**
**Turmstraße 44**
**4031 Linz (AT)**

# (54) ELEKTRISCH ERREGTE SYNCHRONMASCHINE MIT VERBESSERTER STROMERMITTLUNG

(57) Eine elektrisch erregte Synchronmaschine (1) weist einen Stator (2) mit einer Statorwicklung (3) und einen Rotor (5) mit einer Erregerwicklung (6) auf. Eine Steuereinrichtung (9) der Synchronmaschine (1) betreibt die Synchronmaschine (1) mit einem Drehmoment (M), das während Lastphasen (12) einen hohen Wert aufweist und während Lastpausen (13) zwischen den Lastphasen (12) einen erheblich kleineren Wert aufweist. Die Steuereinrichtung (9) rotiert den Rotor (5) während der Lastphasen (12) mit einer für die jeweilige Lastphase (12) einheitlichen Drehrichtung und mit einer Drehzahl (n) oberhalb einer Minimaldrehzahl (nmin). Die Steuereinrichtung (9) ermittelt anhand einer Drehstellung (p) des Rotors (5) eine d-Koordinate und eine q-Koordinate eines durch die Drehstellung (p) des Rotors (5) bestimmten Koordinatensystems. Die d-Koordinate stimmt mit der Richtung eines Flusses überein, der durch einen in der Erregerwicklung (6) fließenden Erregerstrom (Ie) hervorgerufen wird. Die q-Koordinate ist in dem Koordinatensystem orthogonal zur d-Koordinate orientiert. Die Steuereinrichtung (9) stellt vor einer Lastphase (12) noch während der Lastpause (13) einen q-Strom (Iq) auf einen Anfangswert (Iqa) ein. Während der Lastphase (12) regelt die Steuereinrichtung (9) den q-Strom (Iq) maximal auf das Doppelte des Anfangswertes (Iqa). Spätestens zu Beginn der jeweiligen Lastphase (12) aktiviert die Steuereinrichtung (9) einen Regler (17), der während der jeweiligen Lastphase (12) den d-Strom (Id) und den Erregerstrom (Ie), aber nicht den q-Strom (Iq) nachführt. Das Nachführen erfolgt derart, dass eine Istgröße (x) des Rotors (5) gleich einer entsprechenden Sollgröße (x*) bleibt und der d-Strom (Id) und der Erregerstrom (Ie) die Beziehung

$$Id = -\ddot{u} \cdot Ie + \frac{F}{Xh} \cdot \cos(\alpha)$$

erfüllen.

FIG 1

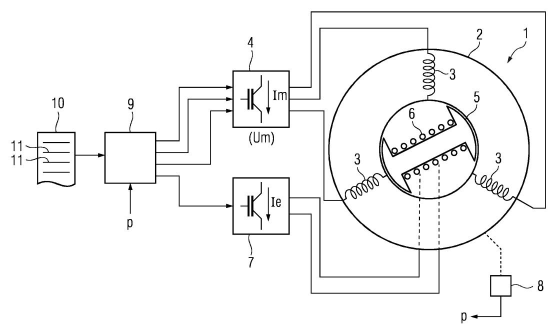


EP 4 757 167 A1

## Beschreibung

Gebiet der Technik

Die vorliegende Erfindung geht aus von einem Betriebsverfahren für eine elektrisch erregte Synchronmaschine, die einen Stator mit einer Statorwicklung und einen Rotor mit einer Erregerwicklung aufweist,

- wobei eine Steuereinrichtung der Synchronmaschine die Synchronmaschine mit einem Drehmoment betreibt, das während Lastphasen einen hohen Wert aufweist und während zwischen den Lastphasen liegender Lastpausen einen erheblich kleineren Wert aufweist,
- wobei die Steuereinrichtung den Rotor während der Lastphasen mit einer für die jeweilige Lastphase einheitlichen Drehrichtung und mit einer Drehzahl oberhalb einer Minimaldrehzahl rotiert,
- wobei die Steuereinrichtung anhand einer Drehstellung des Rotors eine d-Koordinate und eine q-Koordinate eines durch die Drehstellung des Rotors bestimmten Koordinatensystems ermittelt,
- wobei die d-Koordinate mit der Richtung eines Flusses übereinstimmt, der durch einen in der Erregerwicklung fließenden Erregerstrom hervorgerufen wird,
- wobei die q-Koordinate dadurch bestimmt ist, dass sie in dem Koordinatensystem orthogonal zur d-Koordinate orientiert ist.

Die vorliegende Erfindung geht weiterhin aus von einem Steuerprogramm für eine softwareprogrammierbare Steuereinrichtung einer elektrisch erregten Synchronmaschine, wobei das Steuerprogramm Maschinencode umfasst, der von der Steuereinrichtung unmittelbar abarbeitbar ist, wobei die Abarbeitung des Maschinencodes durch die Steuereinrichtung bewirkt, dass die Steuereinrichtung ein derartiges Betriebsverfahren ausführt.

Die vorliegende Erfindung geht weiterhin aus von einer Steuereinrichtung für eine elektrisch erregte Synchronmaschine, wobei die Steuereinrichtung mit einem derartigen Steuerprogramm programmiert ist, so dass die Steuereinrichtung ein derartiges Betriebsverfahren ausführt.

Die vorliegende Erfindung geht weiterhin aus von einer elektrisch erregten Synchronmaschine,

- wobei die Synchronmaschine einen Stator mit einer Statorwicklung und einen Rotor mit einer Erregerwicklung aufweist,
- wobei die Synchronmaschine eine Steuereinrichtung aufweist,
- wobei die Synchronmaschine einen mit der Steuereinrichtung verbundenen Lagegeber zum Erfassen der Drehstellung des Rotors aufweist,
- wobei die Steuereinrichtung als derartige Steuereinrichtung ausgebildet ist, die die Synchronmaschine gemäß einem derartigen Betriebsverfahren steuert.

Stand der Technik

Das vorstehend genannte Betriebsverfahren entspricht einer feldorientierten Regelung. Die feldorientierte Regelung ist allgemein bekannt.

Zusammenfassung der Erfindung

Synchronmaschinen werden für viele Anwendungen eingesetzt. Bei manchen Anwendungen treten immer wieder Phasen hoher Belastung (Lastphasen) auf, zwischen denen Phasen niedriger Belastung (Lastpausen) liegen. Der Übergang von einer Lastphase zu einer Lastpause und vor allem auch umgekehrt kann sprungartig sein. Ein Beispiel einer Anwendung, bei der ein derartiger sprungartiger Wechsel von Lastphasen und Lastpausen auftritt, ist die Verwendung der Synchronmaschine als Antrieb eines Walzgerüsts. Beim Anstich, wenn also der Kopf des Walzguts in das Walzgerüst einläuft, beginnt sprungartig eine Lastphase. Ähnlich sprungartig endet eine Lastphase, wenn der Fuß des Walzguts aus dem Walzgerüst ausläuft.

In der Praxis hat sich gezeigt, dass der sprungartige Wechsel insbesondere von einer Lastpause zu einer Lastphase manchmal zu einem instabilen Zustand der Synchronmaschine und in der Konsequenz zu Störungen der von der Synchronmaschine angetriebenen Einrichtung führen kann. Die Störungen können zwar durch Verwendung eines größer dimensionierten Antriebs vermieden werden. Diese Lösung ist jedoch mit erhöhten Kosten verbunden. Sie wird daher nur dann ergriffen, wenn keine andere Möglichkeit zur Vermeidung der Störungen besteht.

Die Aufgabe der vorliegenden Erfindung besteht darin, Möglichkeiten zu schaffen, mittels derer ein instabiler Zustand der Synchronmaschine beim Übergang von einer Lastpause zu einer Lastphase zuverlässig vermieden werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 12.

Erfindungsgemäß wird ein Betriebsverfahren der eingangs genannten Art dadurch ausgestaltet,

- dass die Steuereinrichtung vor einer Lastphase noch während der Lastpause einen in Richtung der q-Koordinate gerichteten q-Strom auf einen Anfangswert einstellt,
- dass die Steuereinrichtung während der Lastphase den q-Strom maximal auf das Doppelte des Anfangswertes regelt und
- dass die Steuereinrichtung spätestens zu Beginn der auf die Lastpause folgenden Lastphase einen von der Steuereinrichtung implementierten Regler aktiviert, der während der Lastphase den d-Strom und den Erregerstrom, aber nicht den q-Strom derart nachführt, so dass die Istgröße des Rotors gleich der Sollgröße bleibt und der d-Strom und der Erregerstrom die Beziehung

$$Id = -ü \cdot Ie + \frac{F}{Xh} \cdot \cos(\alpha)$$

erfüllen,

- wobei Id der d-Strom ist, ü ein Übersetzungsverhältnis zwischen der Erregerwicklung und der Statorwicklung ist, Ie der Erregerstrom ist, F ein durch den d-Strom, den q-Strom und den Erregerstrom bewirkter resultierender magnetischer Fluss der Synchronmaschine ist, Xh eine Hauptinduktivität der Synchronmaschine ist, $\alpha$ ein Flusswinkel ist, den der resultierende magnetische Fluss mit der d-Koordinate bildet, und die Istgröße und die Sollgröße eine Drehzahl oder ein Drehmoment sind.

Durch die erfindungsgemäße Vorgehensweise ist es insbesondere möglich, im Stator bereits vor der Lastphase einen hohen q-Strom aufzubauen. Dies ist deshalb von Vorteil, weil der q-Strom gegen die dämpfende Wirkung der Hauptinduktivität der Synchronmaschine (hiermit gleichbedeutend ist der Begriff "Hauptreaktanz der Synchronmaschine") aufgebaut werden muss und daher nicht schnell geändert werden kann. Der d-Strom und der Erregerstrom können hingegen bei entsprechender Abstimmung aufeinander sehr schnell aufgebaut und gegebenenfalls auch wieder abgebaut werden. Es ist daher möglich, beim Übergang von der Lastpause zu der Lastphase sehr schnell die entsprechende Einstellung insbesondere des Erregerstroms vorzunehmen. Dies ist deshalb von Bedeutung, weil das von der Synchronmaschine generierte Drehmoment proportional zum Produkt des Erregerstroms und des q-Stroms ist. Die Abstimmung des d-Stroms und des Erregerstroms aufeinander wird durch die Einhaltung der Beziehung

$$Id = -ü \cdot Ie \cdot \frac{F}{Xh} \cdot \cos(\alpha)$$

gewährleistet.

Natürlich muss die Synchronmaschine während der jeweiligen Lastphase das geforderte Drehmoment generieren können. Die Bedingung, dass die Steuereinrichtung während der Lastphase den q-Strom maximal auf das Doppelte des Anfangswertes regelt, impliziert daher eine entsprechende Bestimmung des Anfangswertes in Abhängigkeit von dem während der Lastphase geforderten Drehmoment.

Vorzugsweise nutzt die Steuereinrichtung während der Lastphase nicht die maximale Möglichkeit zum Erhöhen des q-Stroms aus. Insbesondere ist es möglich, dass die Steuereinrichtung während der Lastphase den q-Strom nur maximal auf das 1,5-fache oder das 1,2-fache des Anfangswertes regelt. In diesem Fall gelten die vorstehenden Ausführungen nicht bezüglich des Doppelten des Anfangswertes, sondern bezüglich des 1,5-fachen oder des 1,2-fachen des Anfangswertes. Der Anfangswert kann also entsprechend größer sein.

Vorzugsweise ermittelt der Regler zunächst den Erregerstrom und ermittelt sodann den d-Strom anhand der genannten Beziehung. Dies hat insbesondere den Vorteil, dass zunächst der Erregerstrom, der für die Änderung des generierten Drehmoments erforderlich ist, berechnet werden kann und erst dann hierauf aufbauend der d-Strom ermittelt wird. Damit kann eine schnellere Anpassung des generierten Drehmoments an das erforderliche Lastmoment erfolgen.

Vorzugsweise hält die Steuereinrichtung in der auf die jeweilige Lastphase folgenden Lastpause den Regler zumindest so lange aktiviert, bis der d-Strom und der Erregerstrom einen jeweiligen statischen Wert erreicht haben. Dadurch kann insbesondere ein stabiler Übergang von der jeweiligen Lastphase in die jeweilige Lastpause gewährleistet werden.

Im Gegensatz zum Übergang von einer Lastpause zu einer Lastphase muss ab dem Beginn der Lastpause der q-Strom nicht mehr auf einem hohen Wert gehalten werden. Vielmehr ist es möglich, dass die Steuereinrichtung in der auf die jeweilige Lastphase folgenden Lastpause den q-Strom verringert. Das Verringern des q-Stroms kann bereits erfolgen, während der Regler noch aktiviert ist. Hierbei ist es alternativ möglich, dass die Steuereinrichtung den q-Strom nur während oder auch während des Zeitraums verringert, während dessen die Steuereinrichtung den Regler noch aktiviert hält. Ein Verringern nur während des Zeitraums, während dessen die Steuereinrichtung den Regler noch aktiviert hält, ist möglich, wenn während dieses Zeitraums ein vollständiges bzw. allgemein hinreichendes Absenken des q-Stroms auf einen gewünschten Wert möglich ist. Anderenfalls erfolgt auch nach diesem Zeitraum ein noch weitergehendes Absenken des q-Stroms.

Vorzugsweise stellt die Steuereinrichtung während einer jeweiligen Lastpause die Drehrichtung des Rotors entsprechend einer auf die Lastpause folgenden Lastphase ein. Das Einstellen der Drehrichtung des Rotors kann nach Bedarf mit einem Beibehalten oder mit einem Invertieren der Drehrichtung des Rotors verbunden sein. Vorzugsweise stellt die Steuereinrichtung zum Einstellen der Drehrichtung des Rotors das Vorzeichen des q-Stroms ein. Ein Invertieren der Drehrichtung des Rotors ist in diesem Fall mit einem Invertieren des Vorzeichens des q-Stroms verbunden. Die Verwendung des q-Stroms für das Einstellen der Drehrichtung des Rotors ist deshalb von Vorteil, weil in diesem Fall der Erregerstrom unabhängig von der Drehrichtung des Rotors stets das gleiche Vorzeichen aufweisen kann. Ein Stromsteller, mittels dessen der Erregerstrom eingestellt wird (beispielsweise ein Umrichter) muss daher nur einen einzelnen Quadranten (positive Drehrichtung, positiver Strom) abdecken können und kann daher einfach und kostengünstig ausgestaltet werden.

Vorzugsweise ist der Betrag des Anfangswertes des q-Stroms dadurch bestimmt, dass der Betrag des resultierenden magnetischen Flusses in einem vorbestimmten Bereich liegt und/oder bei einer vorbestimmten Drehzahl der Betrag einer an die Statorwicklung angelegten Motorspannung in einem vorbestimmten Bereich liegt. Dadurch kann beispielsweise gewährleistet werden, dass zwar einerseits zu Beginn der Lastphase der resultierende magnetische Fluss zumindest in nennenswertem Umfang aufgebaut ist, die Synchronmaschine sich aber andererseits noch nicht in der Sättigung befindet und/oder während der Lastphase für den Aufbau des d-Stroms und gegebenenfalls auch für das Variieren des q-Stroms eine hinreichende Spannungsreserve zur Verfügung steht. Die vorbestimmte Drehzahl ist vorzugsweise entweder diejenige Drehzahl, mit welcher der Rotor der Synchronmaschine zu Beginn der Lastphase rotieren soll, oder eine Maximaldrehzahl, mit welcher der Rotor der Synchronmaschine während der Lastphase rotieren soll. Es sind aber auch andere Drehzahlen möglich.

Vorzugsweise ist während der Lastpause vor einer Lastphase ab dem Einstellen des q-Stromes, des d-Stromes und des Erregerstroms - wenn also die Synchronmaschine sozusagen für die nächste Lastphase "scharf gemacht" wurde - der Betrag des q-Stromes größer als der Betrag des d-Stromes und auch größer als der mit dem Übersetzungsverhältnis zwischen der Erregerwicklung und der Statorwicklung skalierte Erregerstrom. Der q-Strom stellt also den "Löwenanteil" des resultierenden Motorstroms, dessen Betrag sich als Wurzel aus der Summe der Quadrate von d-Strom und q-Strom ergibt. Insbesondere kann während des genannten Zeitraums der Betrag des q-Stromes mindestens dreimal, vorzugsweise mindestens fünfmal so groß wie der Betrag des d-Stromes sein. Der gleiche Sachverhalt gilt auch bezüglich des mit dem Übersetzungsverhältnis zwischen der Erregerwicklung und der Statorwicklung skalierten Erregerstroms.

in einer bevorzugten Ausgestaltung implementiert die Steuereinrichtung einen Fluss- oder Spannungsregler, mittels dessen der resultierende magnetische Fluss oder die Motorspannung ohne Beeinflussung des von der Synchronmaschine generierten Drehmoments und ohne Beeinflussung des Flusswinkels eingestellt wird. Dadurch ist ein - wenn auch nur relativ langsames - Verstellen des magnetischen resultierenden Flusses bzw. der Motorspannung möglich, ohne Rückwirkungen auf das generierte Drehmoment befürchten zu müssen. Ein derartiges Nachführen des resultierenden magnetischen Flusses bzw. der Motorspannung kann beispielsweise auch im Rahmen einer sogenannten Feldschwächung genutzt werden. Eine Feldschwächung, d.h. eine Reduzierung des q-Stroms, ist insbesondere bei höheren Drehzahlen erforderlich, um zu gewährleisten, dass der Betrag der Motorspannung innerhalb seines zulässigen bzw. realisierbaren Bereichs bleibt.

In analoger Weise implementiert die Steuereinrichtung vorzugsweise auch einen Flusswinkelregler, mittels dessen der Flusswinkel ohne Beeinflussung des von der Synchronmaschine generierten Drehmoments und ohne Beeinflussung des resultierenden magnetischen Flusses eingestellt wird. Dadurch ist auch ein - wenn auch nur relativ langsames - Verstellen des Flusswinkels möglich, ohne Rückwirkungen auf das generierte Drehmoment befürchten zu müssen.

Vorzugsweise führt die Steuereinrichtung während des Einstellens des q-Stroms auf den Anfangswert den d-Strom und den Erregerstrom derart nach, dass ein von der Synchronmaschine generiertes Drehmoment im wesentlichen konstant bleibt. Der Begriff "im wesentlichen konstant" soll bedeuten, dass das generierte Drehmoment während des Einstellens des q-Stroms auf den Anfangswert nach Möglichkeit um 30 % oder weniger schwankt, in jedem Fall aber maximal 50 % des Minimalwertes des Drehmoments ist, das von der Synchronmaschine während der nachfolgenden Lastphase generiert wird.

In einer bevorzugten Anwendung des vorstehenden Prinzips treibt die Synchronmaschine Walzen eines Walzgerüsts an. In diesem Fall korrespondieren die Lastphasen mit Zeiten, während derer sich in einem Walzspalt des Walzgerüsts ein Walzgut aus Metall befindet. Somit korrespondieren die Lastpausen mit Zeiten, während derer sich in dem Walzspalt kein Walzgut befindet. Gegebenenfalls können die Lastphasen auch kurze Zeiträume unmittelbar vor dem Anstich mit umfassen, falls der Antriebsstrang des Walzgerüsts (Synchronmaschine, Getriebe, angetriebene Walzen) durch geeignetes Beschleunigen der Synchronmaschine auf den Zeitpunkt des Anstichs vorbereitet werden soll.

Die Aufgabe wird weiterhin durch ein Steuerprogramm mit den Merkmalen des Anspruchs 12 gelöst. Erfindungsgemäß bewirkt die Abarbeitung des Maschinencodes durch die Steuereinrichtung, dass die Steuereinrichtung ein erfindungsgemäßes Betriebsverfahren ausführt.

Die Aufgabe wird weiterhin durch eine Steuereinrichtung mit den Merkmalen des Anspruchs 13 gelöst. Erfindungsgemäß ist die Steuereinrichtung mit einem erfindungsgemäßen Steuerprogramm programmiert, so dass die Steuereinrichtung ein erfindungsgemäßes Betriebsverfahren ausführt.

Die Aufgabe wird weiterhin durch eine elektrisch erregte Synchronmaschine mit den Merkmalen des Anspruchs 14 gelöst. Erfindungsgemäß ist die Steuereinrichtung als erfindungsgemäße Steuereinrichtung ausgebildet, welche die Synchronmaschine gemäß einem erfindungsgemä-ßen Betriebsverfahren steuert.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:

| | |
|---|---|
| FIG 1 | eine elektrisch erregte Synchronmaschine einschließlich Steuerung, |
| FIG 2 und 3 | Zeitdiagramme, |
| FIG 4 | ein Walzgerüst, ein Walzgut und eine Synchronmaschine, |
| FIG 5A und 5B | ein Ablaufdiagramm, |
| FIG 6 | ein Zeigerdiagramm, |
| FIG 7 | ein Zeitdiagramm, |
| FIG 8 | ein Zeigerdiagramm, |
| FIG 9 | ein Blockschaltbild und |
| FIG 10 | ein Zeigerdiagramm. |

Beschreibung der Ausführungsformen

Gemäß FIG 1 weist eine elektrisch erregte Synchronmaschine 1 einen Stator 2 mit einer Statorwicklung 3 auf. In die Statorwicklung 3 kann von einem Umrichter 4 ein Motorstrom Im eingespeist werden. Der Motorstrom Im ist mehrphasig, in der Regel dreiphasig. Die Synchronmaschine 1 weist weiterhin einen Rotor 5 mit einer Erregerwicklung 6 auf. In die Erregerwicklung 6 kann von einem Stromsteller 7 ein Erregerstrom Ie eingespeist werden. Der Stromsteller 7 kann ein Umrichter sein. Der Erregerstrom Ie ist in der Regel ein Gleichstrom.

Einer Steuereinrichtung 9 der Synchronmaschine 1 ist die jeweilige aktuelle Drehstellung p des Rotors 5 bekannt. Es ist möglich, dass die Steuereinrichtung 9 die aktuelle Drehstellung p anhand interner Daten ermittelt. In der Regel weist die Synchronmaschine 1 jedoch einen Lagegeber 8 auf, mittels dessen jeweils die aktuelle Drehstellung p des Rotors 5 messtechnisch erfasst wird. In diesem Fall ist der Lagegeber 8 mit der Steuereinrichtung 9 verbunden und übermittelt laufend die jeweils aktuelle Drehstellung p an die Steuereinrichtung 9. Die Steuereinrichtung 9 wiederum ermittelt kontinuierlich Sollwerte für den Motorstrom Im und den Erregerstrom Ie und steuert den Umrichter 4 und den Stromsteller 7 derart an, dass diese den entsprechenden Motorstrom Im und den entsprechenden Erregerstrom Ie zur Verfügung stellen.

Die Steuereinrichtung 9 ist softwareprogrammierbar. Die Steuereinrichtung 9 ist mit einem Steuerprogramm 10 programmiert. Das Steuerprogramm 10 umfasst Maschinencode 11, der von der Steuereinrichtung 9 unmittelbar abarbeitbar ist. Die Abarbeitung des Maschinencodes 11 durch die Steuereinrichtung 9 bewirkt, dass die Steuereinrichtung 9 ein Betriebsverfahren ausführt, das nachstehend näher erläutert wird. Die Ausführung des Betriebsverfahrens bewirkt insbesondere, dass die Steuereinrichtung 9 die Synchronmaschine 1 gemäß einem derartigen Betriebsverfahren steuert.

Das erfindungsgemäße Betriebsverfahren betrifft eine spezielle Betriebsart der Synchronmaschine 1. Diese Betriebsart wird nachstehend in Verbindung mit den FIG 2 und 3 schematisch erläutert.

FIG 2 zeigt als Funktion der Zeit t einen Verlauf des Drehmoments M, das von der Synchronmaschine 1 generiert und abgegeben wird. Gemäß FIG 2 weist das Drehmoment M, mit dem die Steuereinrichtung 9 die Synchronmaschine 1 betreibt, während Lastphasen 12 einen hohen Wert auf. Zwischen den Lastphasen 12 liegen Lastpausen 13, während derer das Drehmoment M, mit dem die Steuereinrichtung 9 die Synchronmaschine 1 betreibt, einen erheblich kleineren Wert aufweist.

Der genaue Wert des Drehmoments M während der jeweiligen Lastphase 12 ist von untergeordneter Bedeutung. Es kann sich um einen zeitlich konstanten oder einen zeitlich variierenden Wert handeln. Ebenso ist auch der genaue Wert des Drehmoments M während der Lastpausen 13 von untergeordneter Bedeutung. Es kann sich um einen zeitlich konstanten oder einen zeitlich variierenden Wert handeln. Aus diesem Grund sind in FIG 2 nur entsprechende Bereiche eingezeichnet. Von Bedeutung sind hingegen die deutlichen Abstände voneinander. Insbesondere ist der minimale Wert M1 des Drehmoments M während der Lastphasen 12 erheblich größer als der maximale Wert M2 des Drehmoments M während der Lastpausen 13. Meist liegt zwischen dem minimalen Wert M1 des Drehmoments M während der Lastphasen 12 und dem maximalen Wert M2 des Drehmoments M während der Lastpausen 13 mindestens eine Größenordnung, also der Faktor 10. Manchmal liegen dazwischen auch zwei oder mehr Größenordnungen. Eine Ausnahme kann jedoch während Zeiträumen der jeweiligen Lastpause 13 gelten, während derer eine Drehrichtungsumkehr der Synchronmaschine 1 erfolgt.

Weiterhin rotiert die Steuereinrichtung 9 den Rotor 5 gemäß FIG 3 während der Lastphasen 12 mit einer für die jeweilige Lastphase 12 einheitlichen Drehrichtung. Die Drehzahl n kann zwar variieren, bleibt aber während der Lastphase 12 (betragsmäßig) stets oberhalb einer Minimaldrehzahl nmin. Weiterhin bleibt während der jeweiligen Lastphase 12 die Drehrichtung des Rotors 5 stets gleich. Während der Lastpausen 13 kann zum einen eine Absenkung des Betrages der Drehzahl n unter die Minimaldrehzahl nmin erfolgen. Zum anderen kann während der Lastpausen 13 auch eine Umkehr der Drehrichtung erfolgen. Sowohl das Absenken des Betrages der Drehzahl n als auch die Invertierung der Drehrichtung sind jedoch nicht zwingend.

FIG 4 zeigt einen typischen Anwendungsfall, bei dem ein derartiger Wechsel zwischen Lastphasen 12 und Lastpausen 13 immer wieder auftritt. Gemäß FIG 4 treibt die Synchronmaschine 1 Walzen 14 eines Walzgerüsts 15 an. In diesem Fall korrespondieren die Lastphasen 12 der FIG 2 und 3 mit Zeiten, während derer sich in einem Walzspalt des Walzgerüsts 15 ein Walzgut 16 aus Metall befindet. Ebenso korrespondieren die Lastpausen 13 mit Zeiten, während derer sich in dem Walzspalt kein Walzgut 16 befindet.

Es ist möglich, dass das Walzgerüst 15 Bestandteil einer mehrgerüstigen Walzstraße ist. In diesem Fall - siehe den geschwungenen Pfeil bei der oberen Walze 14 - würde das Walzgut 16 das Walzgerüst 15 stets in der gleichen Richtung durchlaufen. Damit wäre die Drehrichtung der Walzen 14 und damit auch des Rotors 5 der Synchronmaschine 1 bei jedem Walzstich dieselbe. Es ist aber auch möglich, dass das Walzgerüst 15 ein Reversiergerüst ist. In diesem Fall - siehe den geschwungenen Doppelpfeil bei der unteren Walze 14 - würde das Walzgut 16 das Walzgerüst 15 in manchen Fällen von links nach rechts und in anderen Fällen von rechts nach links durchlaufen. Damit würde die Drehrichtung der Walzen 14 und auch die Drehrichtung der Synchronmaschine 1 nach jedem Walzstich oder zumindest zwischen einigen Walzstichen wechseln.

Das erfindungsgemäße Betriebsverfahren wird nachstehend in Verbindung mit den FIG 5A und 5B erläutert.

Die Darstellung der FIG 5A und 5B geht davon aus, dass sich die Synchronmaschine 1 zunächst in einer Lastpause 13 befindet. In diesem Zustand wird der Steuereinrichtung 9 gemäß der FIG 5A und 5B in einem Schritt S1 zunächst die Drehstellung p des Rotors 5 bekannt. Beispielsweise kann die Steuereinrichtung 9 im Schritt S1 die Drehstellung p des Rotors 5 von dem Lagegeber 8 entgegennehmen.

Die Drehstellung p des Rotors 5 definiert ein zweidimensionales Koordinatensystem mit einer d-Richtung und einer q-Richtung. Die d-Richtung und die q-Richtung rotieren, wenn der Rotor 5 sich mit einer (mechanischen) Winkelgeschwindigkeit $\omega 1$ dreht, mit einer (elektrischen) Winkelgeschwindigkeit $\omega 2$. Die mechanische und die elektrische Winkelgeschwindigkeit $\omega 1$, $\omega 2$ sind, wie Fachleuten allgemein bekannt ist, über die Polpaarzahl der Synchronmaschine 1 miteinander verknüpft. Die d-Koordinate stimmt mit der Richtung eines Flusses überein, der durch den Erregerstrom Ie hervorgerufen wird. Die q-Koordinate ist dadurch bestimmt, dass sie in dem Koordinatensystem (elektrisch) orthogonal zur d-Koordinate orientiert ist. Die Steuereinrichtung 9 ist daher in der Lage, in einem Schritt S2 anhand der Drehstellung p des Rotors 5 die d-Koordinate und die q-Koordinate zu ermitteln. Die Ermittlung ist Fachleuten allgemein bekannt.

In einem nachfolgenden Schritt S3 ermittelt die Steuereinrichtung 9 einen q-Strom Iq, einen d-Strom Id und den Erregerstrom Ie. Der d-Strom Id ist in Richtung der d-Koordinate gerichtet, der q-Strom in Richtung der q-Koordinate. Im Rahmen der Ermittlung im Schritt S3 weisen entsprechend der Darstellung in FIG 6 alle drei Ströme Iq, Id, Ie einen relativ geringen Wert auf. Demzufolge ist ein durch den d-Strom Id, den q-Strom Iq und den Erregerstrom Ie bewirkter resultierender magnetischer Fluss F der Synchronmaschine 1 relativ gering. Das gleiche gilt auch für das generierte Drehmoment M der Synchronmaschine 1. Mit ü ist in FIG 6 das Übersetzungsverhältnis zwischen der Erregerwicklung 6 und der Statorwicklung 3 bezeichnet, mit Xh eine Hauptinduktivität der Synchronmaschine 1. Weiterhin bildet der resultierende magnetische Fluss F mit der d-Koordinate einen Flusswinkel $\alpha$. Der gestrichelte Viertelkreis zeigt den Maximalwert des resultierenden magnetischen Flusses F dividiert durch die Hauptinduktivität der Synchronmaschine 1. Letzteres gilt auch für die Zeigerdiagramme der FIG 8 und 10. Dadurch können insbesondere die Zeigerdiagramme der FIG 6, 8 und 10 zumindest qualitativ miteinander verglichen werden.

In einem Schritt S4 erfolgt eine Transformation des d-Stroms Id und des q-Stroms Iq in den Motorstrom Im für die Statorwicklung 3. Die Transformation erfolgt unter Verwendung der Drehstellung p. Eine Umrechnung des Erregerstroms Ie ist nicht erforderlich. In einem Schritt S5 erfolgt die entsprechende Ansteuerung des Umrichters 4 und des Stromstellers 7, um die Motorwicklung 3 mit dem Motorstrom Im und die Erregerwicklung 6 mit dem Erregerstrom Ie zu beaufschlagen.

In einem Schritt S6 prüft die Steuereinrichtung 9, ob ein Übergang zu der nächsten Lastphase 12 bevorsteht. Solange dies nicht der Fall ist, geht die Steuereinrichtung 9 zum Schritt S1 zurück. Die wiederholte Ausführung der Schritte S1 bis S5 hat somit zur Folge, dass die Synchronmaschine 1 (genauer: deren Rotor 5) bei einer bestimmten Drehzahl n (diese kann hoch oder niedrig sein) mit einem niedrigen Drehmoment M in einem (praktisch) lastfreien Zustand rotiert.

Ergibt die Prüfung des Schrittes S6, dass die nächste Lastphase 12 bevorsteht, geht die Steuereinrichtung 9 zu einem Schritt S7 über. Im Schritt S7 stellt die Steuereinrichtung 9 den q-Strom Iq auf einen Anfangswert Iqa ein. Das Einstellen des q-Stromes Iq auf den Anfangswert Iqa erfolgt zwar noch während der jeweiligen Lastpause 13, in der Regel aber erst kurz vor der nachfolgenden Lastphase 12.

Der Anfangswert Iqa ist dadurch bestimmt ist, dass der Betrag des Anfangswertes Iqa des q-Stroms Iq dadurch bestimmt ist, dass der Betrag des resultierenden magnetischen Flusses F in einem vorbestimmten Bereich liegt und/oder bei einer vorbestimmten Drehzahl n der Betrag einer an die Statorwicklung 3 angelegten Motorspannung Um in einem vorbestimmten Bereich liegt. Die Motorspannung Um ist ein Vektor, der für jede Phase bzw. im dq-Koordinatensystem für jede Koordinate jeweils eine Komponente aufweist. Beispielsweise kann die Motorspannung Um entsprechend der Darstellung in FIG 7 bei mindestens 50 % der maximal möglichen Motorspannung Ummax liegen. Der Anfangswert Iqa kann auch derart bestimmt sein, dass die Motorspannung Um bei einem noch größeren Wert liegt, beispielsweise bei 60 %, bei 66 % (= 2/3), bei 80 % oder bei 83 % (= 5/6) der maximal möglichen Motorspannung Ummax. FIG 8 zeigt als Zeigerdiagramm den Zustand, in dem der q-Strom Iq auf den Anfangswert Iqa eingestellt ist.

Aus FIG 8 - genauer: aus dem Vergleich der FIG 6 und 8 - ist auch ersichtlich, dass die Steuereinrichtung 9 während des Einstellens des q-Stroms Iq auf den Anfangswert Iqa insbesondere den Erregerstrom le und in der Folge auch den d-Strom Id nachführt. Das Nachführen erfolgt derart, dass das von der Synchronmaschine 1 während des Einstellens des q-Stroms Iq auf den Anfangswert Iqa generierte Drehmoment M im wesentlichen konstant bleibt. Zu diesem Zweck muss insbesondere der Erregerstrom le reduziert werden. Der d-Strom Id wird entsprechend angepasst.

Aus FIG 7 ist auch ersichtlich, dass - noch während der Lastpause 13 vor einer Lastphase 12 - ab dem Einstellen des q-Stromes Iq auf den Anfangswert Iqa der Betrag des q-Stromes Iq größer als der Betrag des d-Stromes Id und auch größer als der mit dem Übersetzungsverhältnis ü skalierte Erregerstrom le ist. In aller Regel ist der Betrag des q-Stromes Iq mindestens dreimal so groß wie der Betrag des d-Stromes Id und ist auch mindestens dreimal so groß wie der mit dem Übersetzungsverhältnis ü skalierte Erregerstrom le. Vorzugsweise gilt sogar nicht nur der Faktor 3, sondern sogar der Faktor 5.

Im Rahmen des Schrittes S7 werden der Erregerstrom le und der d-Strom Id derart aufeinander abgestimmt, dass sie die Beziehung

$$Id = -ü \cdot Ie + \frac{F}{Xh} \cdot \cos(\alpha)$$

erfüllen. Vorher kann diese Beziehung erfüllt sein. Es ist aber nicht zwingend erforderlich.

Nach dem Einstellen des q-Stroms Iq auf den Anfangswert Iqa (in der Regel unmittelbar danach) aktiviert die Steuereinrichtung 9 in einem Schritt S8 einen Regler 17 (siehe FIG 9). Die Aktivierung erfolgt somit spätestens zu Beginn der Lastphase 12.

Nach der Ausführung des Schrittes S8 und damit auch während der Lastphase 12 wird der Steuereinrichtung 9 in einem Schritt S9 wieder die Drehstellung p des Rotors 5 bekannt. Somit ist die Steuereinrichtung 9 auch in der Lage, in einem Schritt S10 anhand der Drehstellung p die d-Koordinate und die q-Koordinate zu ermitteln. Die Schritte S9 und S10 korrespondieren 1:1 mit den Schritten S1 und S2.

Dem Regler 17 werden gemäß FIG 9 eine Istgröße x und eine korrespondierende Sollgröße x* (bzw. deren Differenz) zugeführt. Die Istgröße x kann entsprechend der Darstellung in FIG 9 alternativ eine Drehzahl n oder ein Drehmoment M sein. Somit kann auch die Sollgröße x* alternativ eine Drehzahl n* oder ein Drehmoment M* sein. In jedem Fall aber ist die Istgröße x gleichartig zur Sollgröße x*. Die Istgröße x und die Sollgröße x* sind also entweder beide Drehzahlen n, n* oder beide Drehmomente M, M*.

Der Regler 17 führt - während er aktiv ist - den d-Strom Id und den Erregerstrom le nach, so dass die Istgröße x des Rotors 5 gleich der Sollgröße x* bleibt. Ein Nachführen des q-Stroms Iq nimmt der Regler 17 nicht vor. Der Regler 17 beachtet im Rahmen der Nachführung des d-Stroms Id und des Erregerstroms le die Beziehung

$$Id = -ü \cdot Ie + \frac{F}{Xh} \cdot \cos(\alpha) .$$

Der Regler 17 führt den d-Strom Id und den Erregerstrom le also derart nach, dass die genannte Beziehung erhalten bleibt. Dadurch wird insbesondere erreicht, dass durch das entsprechend koordinierte Nachführen des d-Stroms Id und des Erregerstroms le zwar das von der Synchronmaschine 1 generierte Drehmoment M geändert wird. Diese Änderung erfolgt zu dem Zweck, die Istgröße x des Rotors auf ihrer Sollgröße x* zu halten. Der Regler 17 hat hingegen weder einen Einfluss auf den resultierenden magnetischen Fluss F noch auf den Flusswinkel $\alpha$.

Beispielsweise kann der Regler 17 entsprechend der Darstellung in FIG 9 zunächst den Erregerstrom le ermitteln und sodann den d-Strom Id anhand der genannten Beziehung ermitteln. Im Rahmen des Ablaufdiagramms der FIG 5A und 5B kann die Steuereinrichtung 9 beispielsweise in einem Schritt S11 die Istgröße x entgegennehmen. Je nachdem, ob die Istgröße x größer oder kleiner als die Sollgröße x* ist, inkrementiert oder dekrementiert die Steuereinrichtung 9 in nachfolgenden Schritten S12 bis S15 mittels des Reglers 17 den Erregerstrom le. In einem weiteren Schritt S16 kann die Steuereinrichtung 9 sodann mittels des Reglers 17 den d-Strom Id gemäß der vorstehenden erläuterten Beziehung ermitteln.

Das Nachführen des d-Stroms Id und des Erregerstroms le erfolgt, wie bereits erwähnt, ab dem Aktivieren des Reglers 17 und damit auch während der Lastphase 12. Im Gegensatz zur Lastpause 13 nehmen der d-Strom Id und der Erregerstrom le in der Lastphase 12 jedoch entsprechend der Darstellung in FIG 10 erheblich größere Werte an. Insbesondere kann der d-Strom Id größer - unter Umständen sogar erheblich größer - als der q-Strom Iq werden. Dies gilt aufgrund des Umstands, dass der d-Strom Id und der Erregerstrom le durch die vorstehende Beziehung miteinander verknüpft sind, in analoger Weise auch für den mit dem Übersetzungsverhältnis ü skalierten Erregerstrom le.

In einem nachfolgenden Schritt S17 ermittelt die Steuereinrichtung 9 den q-Strom Iq. Auf eine mögliche Art der Ermittlung wird später noch eingegangen.

In Schritten S18 und S19 erfolgen eine Transformation des d-Stroms Id und des q-Stroms in Phasenströme für die Statorwicklung 3 sowie die entsprechende Ansteuerung des Umrichters 4 und des Stromstellers 7. Die Schritte S18 und S19 korrespondieren 1:1 mit den Schritten S4 und S5. Analog zu den Schritten S4 und S5 ist somit insbesondere auch eine Umrechnung des Erregerstroms le nicht erforderlich.

In einem Schritt S20 prüft die Steuereinrichtung 9, ob die Lastphase 12 beendet ist. Ist die Lastphase 12 noch nicht beendet, geht die Steuereinrichtung 9 zum Schritt S9 zurück.

Die wiederholte Ausführung der Schritte S9 bis S19 hat somit zur Folge, dass die Synchronmaschine 1 die Istgröße x so gut wie möglich bei der Sollgröße x* hält. Weiterhin wird während der Lastphase 12 der q-Strom Iq entweder nicht geändert oder zwar geändert, aber nicht in großem Umfang geändert. Insbesondere regelt die Steuereinrichtung 9 während der Lastphase 12 den q-Strom Iq (genauer: dessen Betrag) maximal auf das Doppelte des Anfangswertes Iqa. Vorzugsweise erfolgt sogar - zumindest, soweit es den Betrag betrifft, nach oben - nur eine Änderung in einem geringeren Umfang, insbesondere auf maximal das 1,5 -fache oder maximal das 1,2 fache.

Wenn die Lastphase 12 beendet ist, geht die Steuereinrichtung 9 zu einem Schritt S21 über. Im Schritt S21 reduziert die Steuereinrichtung 9 - bei noch aktiviertem Regler 17 - den d-Strom Id und der Erregerstrom Ie, bis der d-Strom Id und der Erregerstrom Ie einen jeweiligen statischen Wert erreicht haben. Aufgrund des Umstands, dass der Regler 17 aktiviert ist, verwertet der Regler 17 beim Reduzieren des Erregerstroms Ie und des d-Stroms Id weiterhin die Beziehung

$$Id = -ü \cdot Ie + \frac{F}{Xh} \cdot \cos(\alpha) .$$

Im Prinzip führt die Steuereinrichtung 9 im Rahmen des Schrittes S20 also Schritte aus, die analog zu den Schritten S9 bis S19 sind. Vorzugsweise ist weiterhin der Schritt S21 derart ausgestaltet, dass die Steuereinrichtung 9 auch den q-Strom Iq verringert. Dies ist möglich, weil die Synchronmaschine 1 ihr Drehmoment M nur noch in geringem Umfang generieren muss.

In einem Schritt S22 prüft die Steuereinrichtung 9, ob der d-Strom Id und der Erregerstrom Ie einen jeweiligen statischen Wert erreicht haben. Es ist möglich, dass der Schritt S22 dahingehend implementiert ist, dass die Steuereinrichtung 9 prüft, ob seit dem Ende der Lastphase 12 eine zusätzliche Zeitspanne verstrichen ist. Es ist aber auch möglich, dass im Schritt S22 auf die zu erzielende Bedingung als solche geprüft wird.

Solange der d-Strom Id und der Erregerstrom Ie ihren jeweiligen statischen Wert noch nicht erreicht haben, geht die Steuereinrichtung 9 zum Schritt S21 zurück. Anderenfalls geht die Steuereinrichtung 9 zu einem Schritt S23 über. Im Schritt S23 deaktiviert die Steuereinrichtung 9 den Regler 17. Sodann kann die Steuereinrichtung 9 vom Ansatz her zum Schritt S1 zurückgehen.

Es ist möglich, dass die Steuereinrichtung 9 mit dem Übergang zum Schritt S23 auch das Absenken des q-Stroms Iq beendet. Alternativ ist es möglich, dass die Steuereinrichtung 9 auch noch den q-Strom Iq im Schritt S23 noch weiter absenkt.

In der Regel sind zusätzliche Schritte S24 und S25 vorhanden, die zusätzlich ausgeführt werden, bevor die Steuereinrichtung 9 zum Schritt S1 zurückgeht. Im Schritt S24 wird der Steuereinrichtung 9 die Drehrichtung des Rotors 5 der nächsten Lastphase 12 bekannt. Im Schritt S25 stellt die Steuereinrichtung 9 die Drehrichtung des Rotors 5 entsprechend ein. In vielen Fällen erfolgt das Einstellen der Drehrichtung des Rotors 5 dadurch, dass die Steuereinrichtung 9 das Vorzeichen des q-Stroms Iq entsprechend einstellt.

Wie bereits erwähnt, wird der q-Strom Iq während der jeweiligen Lastphase 12 konstant gehalten oder zumindest im wesentlichen konstant gehalten. Eine Ausnahme für das Konstanthalten des q-Stroms Iq (vollständig oder im wesentlichen) gilt nur dann, wenn die Synchronmaschine 1 im Feldschwächungsbetrieb betrieben wird bzw. betrieben werden muss.

Sofern der q-Strom Iq nachgeführt werden soll, implementiert die Steuereinrichtung 9 vorzugsweise einen Flussregler 18 (siehe FIG 9). Mittels des Flussreglers 18 kann der resultierende magnetische Fluss F eingestellt werden. Bei geeigneter Auslegung des Flussreglers 18 ist es sogar möglich, den resultierenden magnetischen Fluss F einzustellen, ohne das von der Synchronmaschine 1 generierte Drehmoment M zu beeinflussen und ohne den Flusswinkel $\alpha$ zu beeinflussen. Die entsprechende Arbeitsweise des Flussreglers 18 wird nachstehend erläutert.

Man nehme an, dass zu einem bestimmten Zeitpunkt die drei Ströme Iq, Id und Ie bestimmte Werte aufweisen. Diese Werte werden nachstehend als Iq1, Id1 und Ie1 bezeichnet. Mit diesen Werten ergeben sich ein bestimmter resultierender magnetischer Fluss F = F1 (genauer: dessen Betrag) und ein bestimmter Flusswinkel $\alpha$. Nun soll der resultierende magnetische Fluss F unter Beibehaltung des Flusswinkels $\alpha$ von dem Wert F1 auf einen neuen Wert F2 geändert werden. Zu diesem Zweck ermittelt der Flussregler 18 zunächst einen neuen Wert Iq2 für den q-Strom Iq. Der neue Wert Iq2 ergibt sich zu

$$Iq2 = \frac{F2}{Xh} \cdot \sin(\alpha) .$$

Diese Vorgehensweise ist als solche bekannt und muss daher nicht im Detail erläutert werden.

Eine Änderung q-Stroms Iq auf den vorstehend genannten Wert Iq2 ohne gleichzeitige Anpassung des Erregerstroms Ie wäre mit einer Änderung des Drehmoments M verbunden. Das Drehmoment M soll aber gerade nicht geändert werden. Es muss daher zunächst zusätzlich der Erregerstrom Ie von seinem Wert Ie1 auf einen Wert Ie2 geändert werden, so dass die Beziehung

$$Ie1 \cdot Iq1 = Iq2 \cdot Ie2$$

erhalten bleibt.

Die miteinander gekoppelte Änderung des q-Stroms Iq und des Erregerstroms Ie ohne Anpassung des d-Stroms Id würde zwar das Drehmoment M beibehalten, jedoch den Flusswinkel α ändern. Der Flusswinkel α soll aber ebenfalls nicht geändert werden. Daher muss, ausgehend von den neuen Werten Iq2 für den q-Strom Iq und Ie2 für den Erregerstrom Ie zusätzlich noch der d-Strom auf den neuen Wert Id2

$$Id2 = -\ddot{u} \cdot Ie2 + \frac{F2}{Xh} \cdot \cos(\alpha)$$

geändert werden. Diese Änderung ändert das Drehmoment M nicht, da der d-Strom Id keinen Einfluss auf das Drehmoment M hat. Durch diese Vorgehensweise ist es möglich, den resultierenden magnetischen Fluss F einzustellen, ohne hierbei das von der Synchronmaschine 1 generierte Drehmoment M zu beeinflussen und auch ohne den Flusswinkel α zu beeinflussen.

Alternativ zu einem Flussregler 18 könnte auch die Steuereinrichtung 9 auch einen Spannungsregler implementieren. Die Vorgehensweise wäre völlig analog. In diesem Fall könnte die Motorspannung Um nachgeführt werden, ohne das Drehmoment M und den Flusswinkel α zu beeinflussen. Durch das Nachführen des resultierenden magnetischen Flusses F bzw. der Motorspannung Um kann insbesondere nach Bedarf der Betrag der Motorspannung Um nachgeführt werden. Insbesondere kann die Steuereinrichtung 9 den q-Strom Iq geringfügig reduzieren, wenn anderenfalls der Betrag der Motorspannung Um seine zulässige Grenze überschreiten würde. Im umgekehrten Fall kann die Steuereinrichtung 9 den q-Strom Iq geringfügig anheben. Weiterhin kann auf einfache Weise eine gegebenenfalls erforderliche Feldschwächung realisiert werden.

Alternativ oder zusätzlich zu dem Flussregler 18 (bzw. dem Spannungsregler) kann die Steuereinrichtung 9 einen Flusswinkelregler 19 implementieren, mittels dessen der Flusswinkel α eingestellt und geregelt werden kann. Bei geeigneter Auslegung des Flusswinkelreglers 19 ist es sogar möglich, den Flusswinkel α einzustellen, ohne das von der Synchronmaschine 1 generierte Drehmoment M zu beeinflussen und ohne den resultierenden magnetischen Fluss F zu beeinflussen. Die entsprechende Arbeitsweise des Flusswinkelreglers 19 wird nachstehend erläutert.

Man nehme an, dass zu einem bestimmten Zeitpunkt - ebenso wie zuvor - die drei Ströme Iq, Id und Ie bestimmte Werte aufweisen. Diese Werte werden nachstehend wieder als Iq1, Id1 und Ie1 bezeichnet. Mit diesen Werten ergeben sich ein bestimmter resultierender magnetischer Fluss F und ein bestimmter Flusswinkel α = α1. Nun soll der Flusswinkel α unter Beibehaltung des resultierenden magnetischen Flusses F von dem Wert α1 auf einen neuen Wert α2 geändert werden. Zu diesem Zweck ermittelt der Flusswinkelregler 19 zunächst einen neuen Wert Iq2 für den q-Strom Iq. Der neue Wert Iq2 ergibt sich zu

$$Iq2 = \frac{F}{Xh} \cdot \sin(\alpha 2) .$$

Diese Vorgehensweise ist als solche bekannt und muss daher nicht im Detail erläutert werden.

Eine Änderung q-Stroms Iq auf den vorstehend genannten Wert Iq2 ohne gleichzeitige Anpassung des Erregerstroms Ie wäre - ebenso wie zuvor bei der Anpassung des resultierenden magnetischen Flusses F - mit einer Änderung des Drehmoments M verbunden. Das Drehmoment M soll aber gerade nicht geändert werden. Es muss daher ebenso wie zuvor zunächst zusätzlich der Erregerstrom Ie von seinem Wert Ie1 auf einen Wert Ie2 geändert werden, so dass die Beziehung

$$Ie1 \cdot Iq1 = Iq2 \cdot Ie2$$

erhalten bleibt.

Die miteinander gekoppelte Änderung des q-Stroms Iq und des Erregerstroms Ie ohne Anpassung des d-Stroms Id würde zwar das Drehmoment M beibehalten, jedoch den Betrag des resultierenden magnetischen Flusses F ändern. Der Betrag des resultierenden magnetischen Flusses F soll aber ebenfalls nicht geändert werden. Daher muss, ausgehend von den neuen Werten Iq2 für den q-Strom Iq und Ie2 für den Erregerstrom Ie zusätzlich noch der d-Strom auf den neuen Wert Id2

$$Id2 = -\ddot{u} \cdot Ie2 + \frac{F}{Xh} \cdot \cos(\alpha 2)$$

geändert werden. Diese Änderung ändert das Drehmoment M nicht, da der d-Strom Id keinen Einfluss auf das Drehmoment M hat. Durch diese Vorgehensweise ist es möglich, den Flusswinkel α einzustellen, ohne hierbei das von der Synchronmaschine 1 generierte Drehmoment M zu beeinflussen und auch ohne den Betrag des resultierenden magnetischen Flusses F zu beeinflussen.

Der Sachverhalt, dass die Ströme Iq, Id und Ie sowohl durch den Regler 17 als auch durch den Flussregler 18 als auch durch den Flusswinkelregler 19 geändert werden, stellt nur scheinbar eine Inkonsistenz dar. Denn in der Praxis können die Regelungen sequenziell nacheinander ausgeführt werden und daher - soweit erforderlich - auf dem Ergebnis der jeweils vorherigen Regelung aufbauen.

Man erhält somit drei Regler 17 bis 19, mittels derer - jeweils voneinander entkoppelt - mit hoher Dynamik die Istgröße x und mit niedrigerer Dynamik der resultierende magnetische Fluss F und der Flusswinkel α geregelt werden können.

Die vorliegende Erfindung weist viele Vorteile auf. Der Regler 17 ist einfach zu programmieren und in Betrieb zu nehmen. Gleiches gilt gegebenenfalls für die Regler 18 und 19. Die Synchronmaschine 1 verhält sich während der Lastphasen 12 sehr ähnlich zu einer kompensierten Gleichstrommaschine. Das Verhalten der Synchronmaschine 1 ist daher auch anschaulich leicht zu verstehen. Das Einstellen des d-Stromes Id und des Erregerstroms Ie und damit das Einhalten der Sollgröße x* ist mit einer hohen Dynamik (in der Regel im Bereich niedriger zweistelliger Millisekunden-Werte) möglich. Ermöglicht wird dies dadurch, dass der resultierende magnetische Fluss F durch die koordinierte Änderung des d-Stromes Id und des Erregerstroms Ie nicht geändert wird. Lediglich Streuinduktivitäten müssen überwunden werden. Ein unerwünschtes Einbrechen der Drehzahl n beim Übergang von einer Lastpause 13 zu einer Lastphase 12 kann vermieden werden oder zumindest gering gehalten werden. In analoger Weise kann beim Übergang von einer Lastphase 12 zu einer Lastpause 13 auch ein unerwünschtes Hochlaufen der Drehzahl n vermieden oder zumindest gering gehalten werden. Aufgrund der Einstellung der Drehrichtung des Rotors 5 durch das Vorzeichen des q-Stromes Iq kann der Stromsteller 7 sehr einfach konzipiert werden. Das Verstellen des q-Stromes Iq ist zwar nicht sehr dynamisch. Dies ist jedoch unkritisch, solange die Synchronmaschine 1 sich in einer Lastpause 13 befindet. Während einer Lastphase 12 wird die hohe Dynamik durch das koordinierte Nachführen des d-Stromes Id und des Erregerstroms Ie gewährleistet. Eine Kippneigung der Synchronmaschine 1 kann vermieden werden, da die Drehstellung p des Rotors 5 mittels des Lagegebers 8 messtechnisch erfasst werden kann. Es ist nicht erforderlich, dass Motorparameter der Synchronmaschine 1 exakt bekannt sind. Auch ist kein Flussmodell erforderlich. Verluste können minimiert werden, da während der Lastphasen 12 im Rahmen der Anpassung des generierten Drehmoments M im sogenannten Dämpferkäfig nur geringe Ströme fließen. Lediglich zur Einstellung des resultierenden magnetischen Flusses F und des Flusswinkels $\alpha$ werden im Dämpferkäfig Verluste generiert.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 1 | Synchronmaschine |
| 2 | Stator |
| 3 | Statorwicklung |
| 4 | Umrichter |
| 5 | Rotor |
| 6 | Erregerwicklung |
| 7 | Stromsteller |
| 8 | Lagegeber |
| 9 | Steuereinrichtung |
| 10 | Steuerprogramm |
| 11 | Maschinencode |
| 12 | Lastphasen |
| 13 | Lastpausen |
| 14 | Walzen |
| 15 | Walzgerüst |
| 16 | Walzgut |
| 17 bis 19 | Regler |

| | |
|---|---|
| F, F1, F2 | resultierende magnetische Flüsse |
| Id, Id1, Id2 | d-Strom |
| Ie, Ie1, Ie2 | Erregerstrom |
| Im | Motorstrom |
| Iq, Iq1, Iq2 | q-Strom |
| Iqa | Anfangswert |
| M, M*, M1, M2 | Drehmomente |
| n, n* | Drehzahlen |
| nmin | Minimaldrehzahl |
| p | Drehstellung |
| S1 bis S25 | Schritte |
| t | Zeit |
| Um, Ummax | Motorspannungen |
| ü | Übersetzungsverhältnis |
| x | Istgröße |
| x* | Sollgröße |
| Xh | Hauptinduktivität |

| | |
|---|---|
| $\alpha$, $\alpha$1, $\alpha$2 | Flusswinkel |

**Patentansprüche**

1. Betriebsverfahren für eine elektrisch erregte Synchronmaschine (1), die einen Stator (2) mit einer Statorwicklung (3) und einen Rotor (5) mit einer Erregerwicklung (6) aufweist,

   - wobei eine Steuereinrichtung (9) der Synchronmaschine (1) die Synchronmaschine (1) mit einem Drehmoment (M) betreibt, das während Lastphasen (12) einen hohen Wert aufweist und während zwischen den Lastphasen (12) liegender Lastpausen (13) einen erheblich kleineren Wert aufweist,
   - wobei die Steuereinrichtung (9) den Rotor (5) während der Lastphasen (12) mit einer für die jeweilige Lastphase (12) einheitlichen Drehrichtung und mit einer Drehzahl (n) oberhalb einer Minimaldrehzahl (nmin) rotiert,
   - wobei die Steuereinrichtung (9) anhand einer Drehstellung (p) des Rotors (5) eine d-Koordinate und eine q-Koordinate eines durch die Drehstellung (p) des Rotors (5) bestimmten Koordinatensystems ermittelt,
   - wobei die d-Koordinate mit der Richtung eines Flusses übereinstimmt, der durch einen in der Erregerwicklung (6) fließenden Erregerstrom (Ie) hervorgerufen wird,
- wobei die q-Koordinate dadurch bestimmt ist, dass sie in dem Koordinatensystem orthogonal zur d-Koordinate orientiert ist,

**dadurch gekennzeichnet,**

- **dass** die Steuereinrichtung (9) vor einer Lastphase (12) noch während der Lastpause (13) einen in Richtung der q-Koordinate gerichteten q-Strom (Iq) auf einen Anfangswert (Iqa) einstellt,
- **dass** die Steuereinrichtung (9) während der Lastphase (12) den q-Strom (Iq) maximal auf das Doppelte des Anfangswertes (Iqa) regelt und
- **dass** die Steuereinrichtung (9) spätestens zu Beginn der auf die Lastpause (13) folgenden Lastphase (12) einen von der Steuereinrichtung (9) implementierten Regler (17) aktiviert, der während der Lastphase (12) den d-Strom (Id) und den Erregerstrom (Ie), aber nicht den q-Strom (Iq) derart nachführt, so dass die Istgröße (x) des Rotors (5) gleich der Sollgröße (x*) bleibt und der d-Strom (Id) und der Erregerstrom (Ie) die Beziehung

$$Id = -\ddot{u} \cdot Ie + \frac{F}{Xh} \cdot \cos(\alpha)$$

erfüllen,
- wobei Id der d-Strom (Id) ist, ü ein Übersetzungsverhältnis (ü) zwischen der Erregerwicklung (6) und der Statorwicklung (3) ist, Ie der Erregerstrom (Ie) ist, F ein durch den d-Strom (Id), den q-Strom (Iq) und den Erregerstrom (Ie) bewirkter resultierender magnetischer Fluss (F) der Synchronmaschine (1) ist, Xh eine Hauptinduktivität (Xh) der Synchronmaschine (1) ist, $\alpha$ ein Flusswinkel ($\alpha$) ist, den der resultierende magnetische Fluss (F) mit der d-Koordinate bildet, und die Istgröße (x) und die Sollgröße (x*) eine Drehzahl (n, n*) oder ein Drehmoment (M, M*) sind.

**2.** Betriebsverfahren nach Anspruch 1,
**dadurch gekennzeichnet,**
**dass** der Regler (17) zunächst den Erregerstrom (Ie) ermittelt und sodann den d-Strom (Id) anhand der Beziehung

$$Id = -\ddot{u} \cdot Ie + \frac{F}{Xh} \cdot \cos(\alpha)$$

ermittelt.

**3.** Betriebsverfahren nach Anspruch 1 oder 2,
**dadurch gekennzeichnet,**
**dass** die Steuereinrichtung (9) in der auf die jeweilige Lastphase (12) folgenden Lastpause (13) den Regler (17) zumindest so lange aktiviert hält, bis der d-Strom (Id) und der Erregerstrom (Ie) einen jeweiligen statischen Wert erreicht haben.

**4.** Betriebsverfahren nach Anspruch 3,
**dadurch gekennzeichnet,**
**dass** die Steuereinrichtung (9) in der auf die jeweilige Lastphase (12) folgenden Lastpause (13) den q-Strom (Iq) nur während oder auch während des Zeitraums verringert, während dessen die Steuereinrichtung (9) den Regler (17) noch aktiviert hält.

**5.** Betriebsverfahren nach einem der obigen Ansprüche,
**dadurch gekennzeichnet,**
**dass** die Steuereinrichtung (9) während einer jeweiligen Lastpause (13) die Drehrichtung des Rotors (5) entsprechend einer auf die Lastpause (13) folgenden Lastphase (12) einstellt und dass die Steuereinrichtung (9) zum Einstellen der Drehrichtung des Rotors (5) das Vorzeichen des q-Stroms (Iq) einstellt.

**6.** Betriebsverfahren nach einem der obigen Ansprüche,
**dadurch gekennzeichnet,**
**dass** der Betrag des Anfangswertes (Iqa) des q-Stroms (Iq) dadurch bestimmt ist, dass der Betrag des resultierenden magnetischen Flusses (F) in einem vorbestimmten Bereich liegt und/oder bei einer vorbestimmten Drehzahl (n) der Betrag einer an die Statorwicklung (3) angelegten Motorspannung (Um) in einem vorbestimmten Bereich liegt.

**7.** Betriebsverfahren nach einem der obigen Ansprüche,
**dadurch gekennzeichnet,**
**dass** während der Lastpause (13) vor einer Lastphase (12) ab dem Einstellen des q-Stromes (Iq) auf den Anfangswert (Iqa) der Betrag des q-Stromes (Iq) größer als der Betrag des d-Stromes (Id) und größer als der mit dem Übersetzungsverhältnis (ü) zwischen der Erregerwicklung (6) und der Statorwicklung (3) skalierte Erregerstrom (Ie) ist, insbesondere mindestens dreimal und vorzugsweise mindestens fünfmal so groß wie der Betrag des d-Stromes (Id) ist und insbesondere mindestens dreimal, vorzugsweise mindestens fünfmal so groß wie der mit dem Übersetzungsverhältnis (ü) zwischen der Erregerwicklung (6) und der Statorwicklung (3) skalierte Erregerstrom (Ie) ist.

**8.** Betriebsverfahren nach einem der obigen Ansprüche,

**dadurch gekennzeichnet,**
**dass** die Steuereinrichtung (9) einen Fluss- oder Spannungsregler (18) implementiert, mittels dessen der resultierende magnetische Fluss (F) oder die Motorspannung (Um) ohne Beeinflussung des von der Synchronmaschine (1) generierten Drehmoments (M) und ohne Beeinflussung des Flusswinkels ($\alpha$) eingestellt wird.

**9.** Betriebsverfahren nach einem der obigen Ansprüche,
**dadurch gekennzeichnet,**
**dass** die Steuereinrichtung (9) einen Flusswinkelregler (19) implementiert, mittels dessen der Flusswinkel ($\alpha$) ohne Beeinflussung des von der Synchronmaschine (1) generierten Drehmoments (M) und ohne Beeinflussung des resultierenden magnetischen Flusses (F) eingestellt wird.

**10.** Betriebsverfahren nach einem der obigen Ansprüche,
**dadurch gekennzeichnet,**
**dass** die Steuereinrichtung (9) während des Einstellens des q-Stroms (Iq) auf den Anfangswert (Iqa) den d-Strom (Id) und den Erregerstrom (Ie) derart nachführt, dass ein von der Synchronmaschine (1) während des Einstellens des q-Stroms (Iq) auf den Anfangswert (Iqa) generiertes Drehmoment (M) im wesentlichen konstant bleibt.

**11.** Betriebsverfahren nach einem der obigen Ansprüche,
**dadurch gekennzeichnet,**
**dass** die Synchronmaschine (1) Walzen (14) eines Walzgerüsts (15) antreibt, dass die Lastphasen (12) mit Zeiten korrespondieren, während derer sich in einem Walzspalt des Walzgerüsts (15) ein Walzgut (16) aus Metall befindet, und dass die Lastpausen (13) mit Zeiten korrespondieren, während derer sich in dem Walzspalt kein Walzgut (16) befindet.

**12.** Steuerprogramm für eine softwareprogrammierbare Steuereinrichtung (9) einer elektrisch erregten Synchronmaschine (1), wobei das Steuerprogramm Maschinencode (11) umfasst, der von der Steuereinrichtung (9) unmittelbar abarbeitbar ist, wobei die Abarbeitung des Maschinencodes (11) durch die Steuereinrichtung (9) bewirkt, dass die Steuereinrichtung (9) ein Betriebsverfahren nach einem der obigen Ansprüche ausführt.

**13.** Steuereinrichtung für eine elektrisch erregte Synchronmaschine (1), wobei die Steuereinrichtung mit einem Steuerprogramm (10) nach Anspruch 12 programmiert ist, so dass die Steuereinrichtung ein Betriebsverfahren nach einem der Ansprüche 1 bis 11 ausführt.

**14.** Elektrisch erregte Synchronmaschine,

- wobei die Synchronmaschine einen Stator (2) mit einer Statorwicklung (3) und einen Rotor (5) mit einer Erregerwicklung (6) aufweist,
- wobei die Synchronmaschine eine Steuereinrichtung (9) aufweist,
- wobei die Synchronmaschine einen mit der Steuereinrichtung (9) verbundenen Lagegeber (8) zum Erfassen der Drehstellung (p) des Rotors (5) aufweist,
- wobei die Steuereinrichtung (9) als Steuereinrichtung (9) nach Anspruch 13 ausgebildet ist, die die Synchronmaschine gemäß einem Betriebsverfahren nach einem der Ansprüche 1 bis 11 steuert.

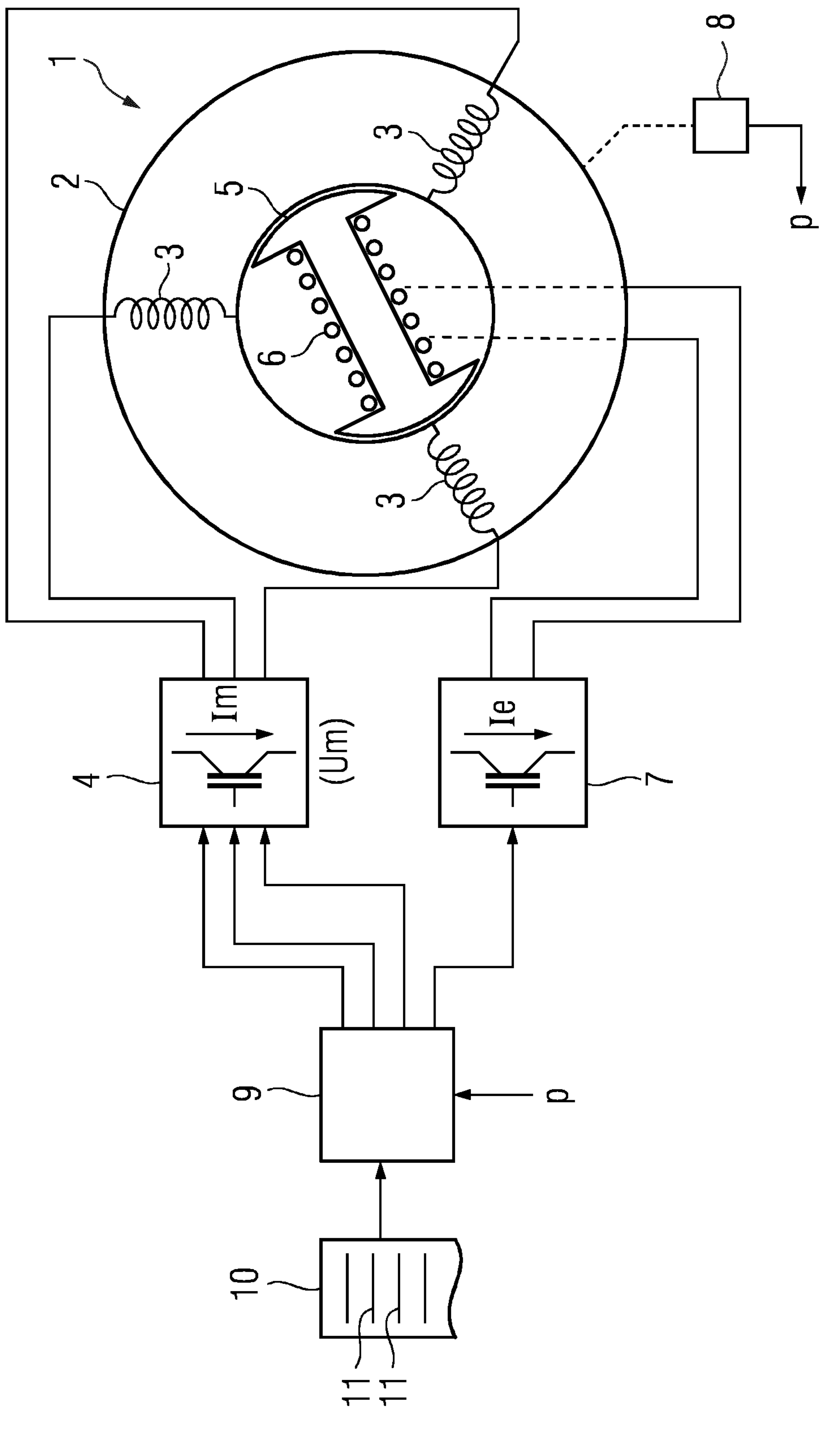


FIG 1

FIG 2

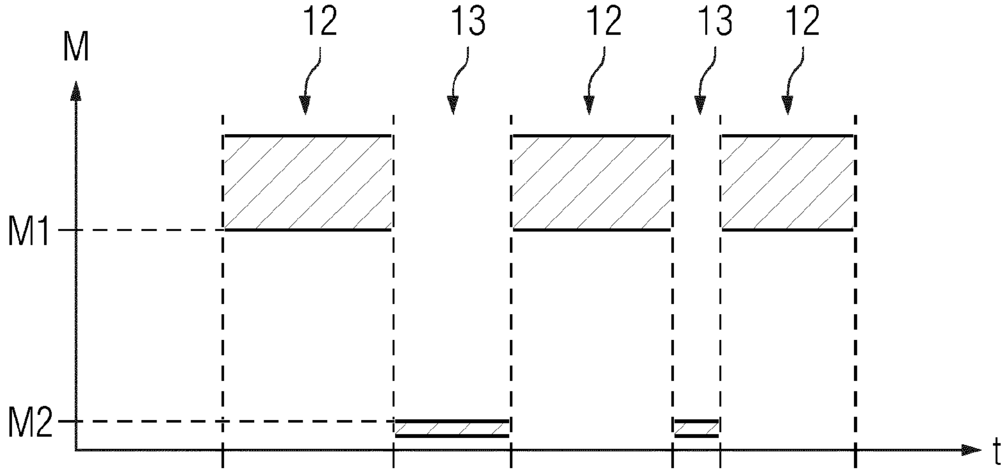


FIG 3

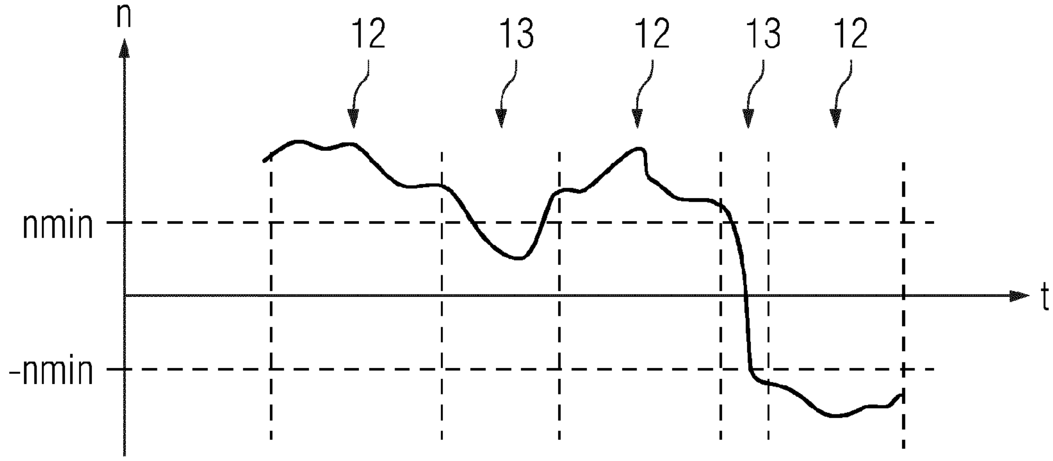


FIG 4

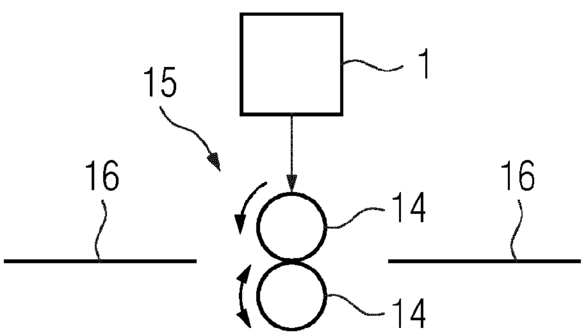

FIG 5A

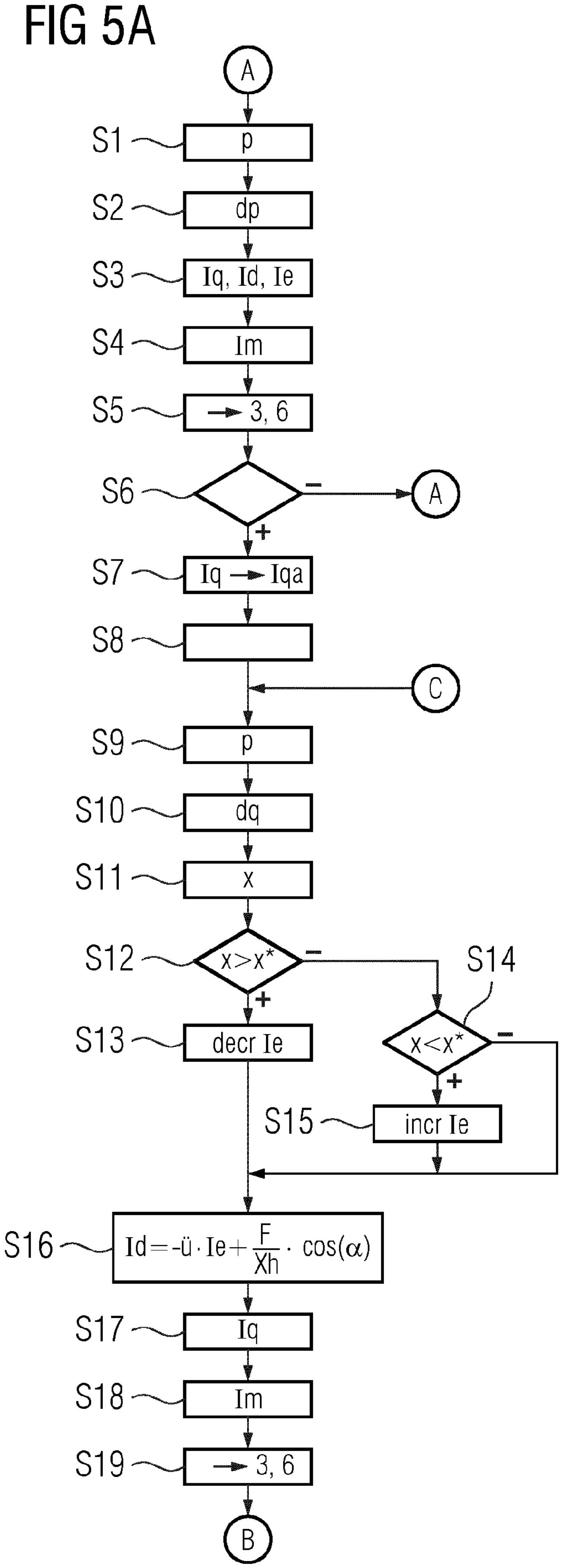
A
S1
p
S2
dp
S3
Iq, Id, Ie
S4
Im
S5
→ 3, 6
S6
−
A
+
S7
Iq → Iqa
S8
C
S9
p
S10
dq
S11
x
S12
x>x*
−
+
S14
S13
decr Ie
x<x*
−
+
S15
incr Ie
S16
Id=-ü·Ie+F/Xh· cos(α)
S17
Iq
S18
Im
S19
→ 3, 6
B

FIG 5B

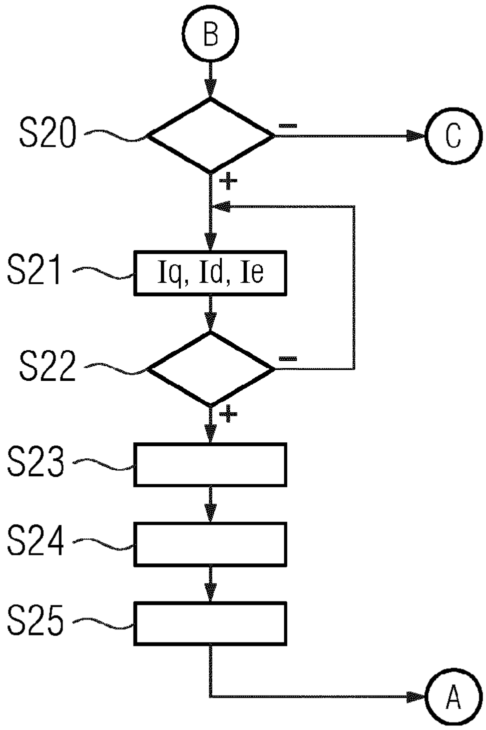


FIG 6

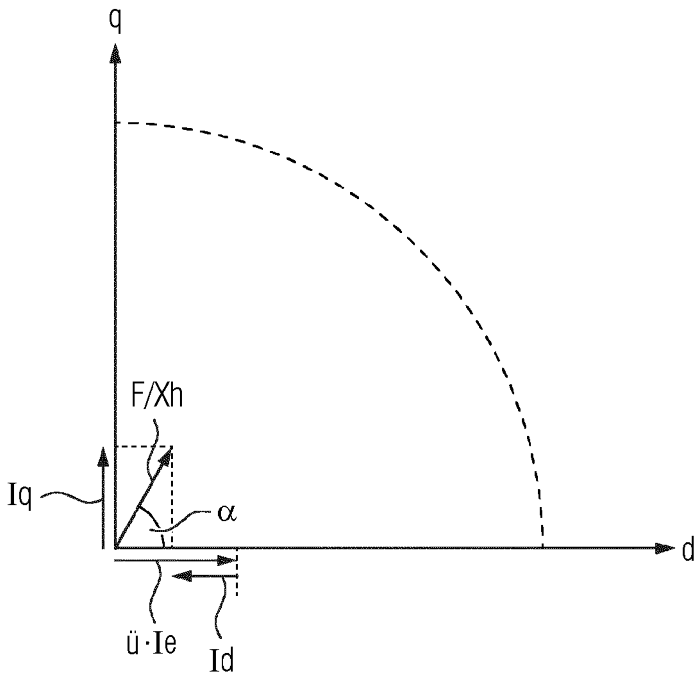

FIG 7

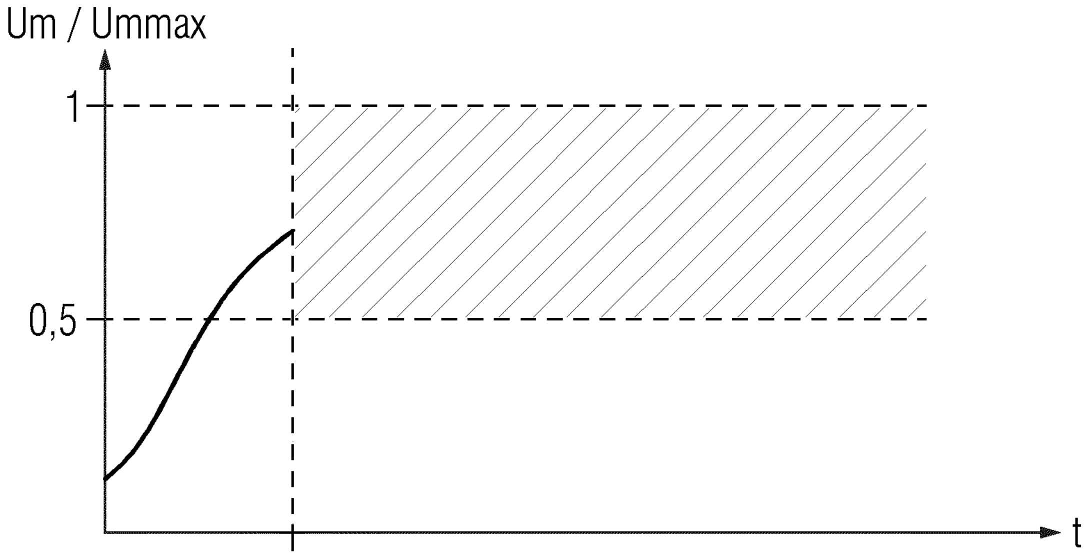


FIG 8

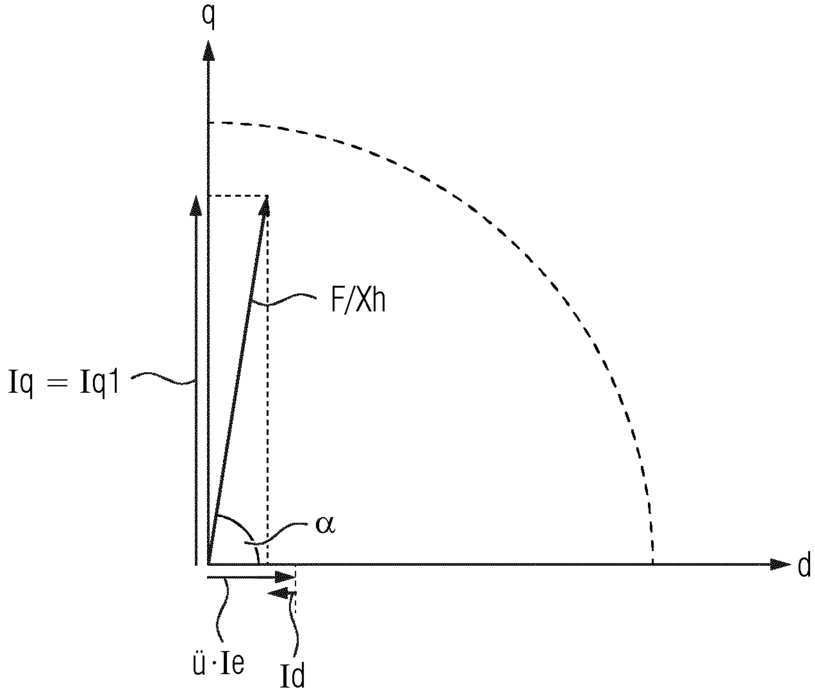

FIG 9

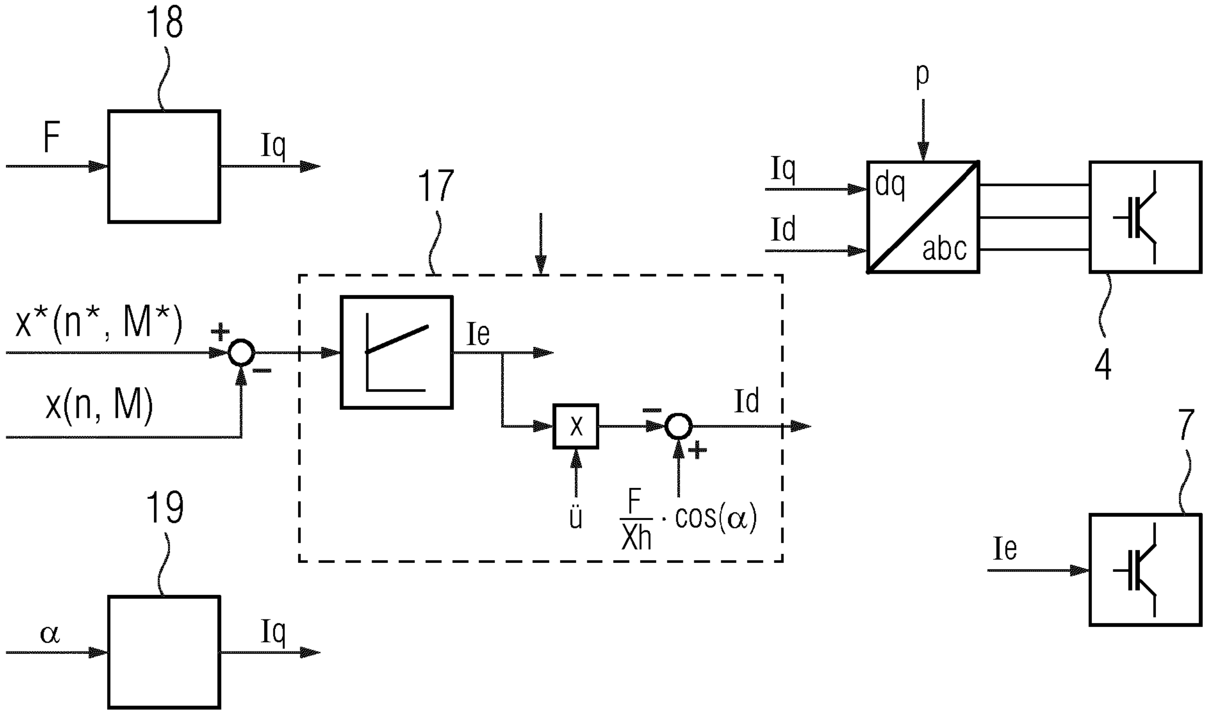
18
F
Iq
17
x*(n*, M*)
+
−
x(n, M)
Ie
x
−
+
Id
ü
F/Xh · cos(α)
19
α
Iq
p
Iq
Id
dq
abc
4
7
Ie

FIG 10

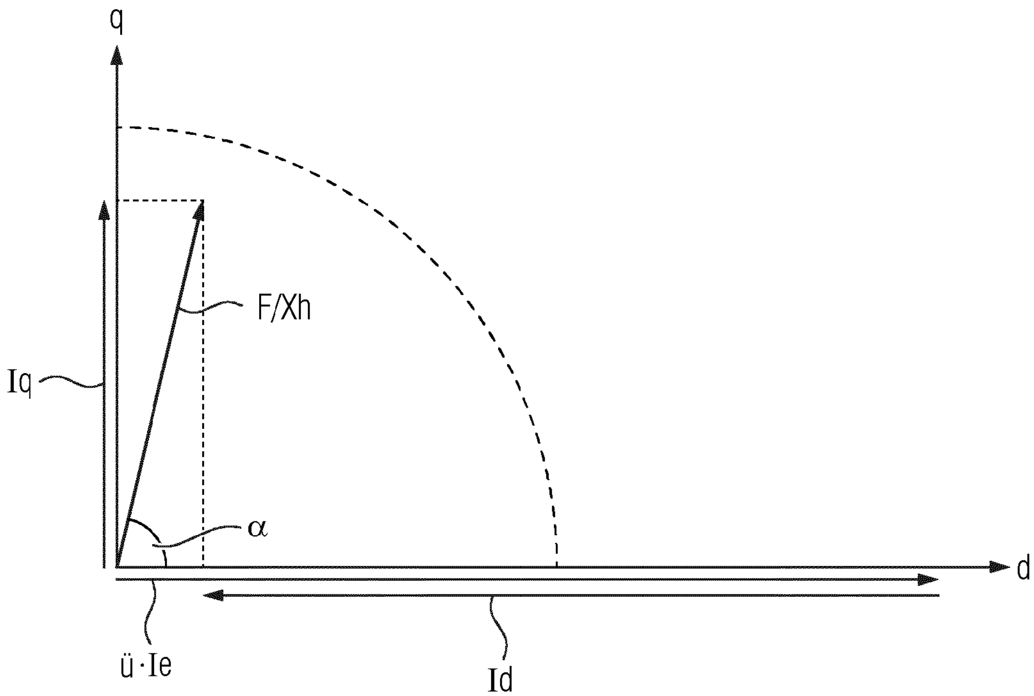
q
F/Xh
Iq
α
d
ü·Ie
Id

Europäisches Patentamt
European Patent Office
Office européen des brevets

# EUROPÄISCHER RECHERCHENBERICHT

Nummer der Anmeldung
EP 24 21 7200

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2011 005291 A1 (SIEMENS AG [DE]) 13. September 2012 (2012-09-13)<br>* das ganze Dokument *<br>----- | 1-14 | INV.<br>H02P6/32<br>H02P21/00<br>H02P21/14<br>H02P21/22<br>H02P25/022<br>H02P29/20<br>B21B35/08<br>H02K3/20<br>H02P9/30 |
| A | DE 10 2017 202714 A1 (BAYERISCHE MOTOREN WERKE AG [DE]) 23. August 2018 (2018-08-23)<br>* das ganze Dokument *<br>----- | 1-14 | |
| A | US 7 902 798 B2 (NIPPON SOKEN [JP]; DENSO CORP [JP]) 8. März 2011 (2011-03-08)<br>* das ganze Dokument *<br>----- | 1-14 | |
| A | REINHARD JOHANNES ET AL: "Optimal dynamic current control for externally excited synchronous machines",<br>2024 IEEE CONFERENCE ON CONTROL TECHNOLOGY AND APPLICATIONS (CCTA), IEEE,<br>21. August 2024 (2024-08-21), Seiten 146-152, XP034692398,<br>DOI: 10.1109/CCTA60707.2024.10666513<br>[gefunden am 2024-09-11]<br>* das ganze Dokument *<br>----- | 1-14 | **RECHERCHIERTE SACHGEBIETE (IPC)**<br>H02P<br>B21B<br>H02K |
| A | Schröder Dierk ET AL: "Synchronmaschine"<br>In: "Elektrische Antriebe - Regelung von Antriebssystemen",<br>1. Januar 2015 (2015-01-01), Springer Berlin Heidelberg, Berlin, Heidelberg, XP093269781,<br>ISBN: 978-3-642-30096-7<br>Seiten 985-1123, DOI: 10.1007/978-3-642-30096-7_16,<br>Gefunden im Internet:<br>URL:https://link.springer.com/content/pdf/10.1007/978-3-642-30096-7_16><br>* das ganze Dokument *<br>----- | 1-14 | |

Der vorliegende Recherchenbericht wurde für alle Patentansprüche erstellt

1

| Recherchenort | Abschlußdatum der Recherche | Prüfer |
|---|---|---|
| München | 15. April 2025 | Wimböck, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 21 7200

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-04-2025

| Im Recherchenbericht angeführtes Patentdokument | Datum der Veröffentlichung | Mitglied(er) der Patentfamilie | Datum der Veröffentlichung |
|---|---|---|---|
| DE 102011005291 A1 | 13-09-2012 | DE 102011005291 A1 | 13-09-2012 |
| | | WO 2012119894 A2 | 13-09-2012 |
| DE 102017202714 A1 | 23-08-2018 | KEINE | |
| US 7902798 B2 | 08-03-2011 | JP 4343235 B2 | 14-10-2009 |
| | | JP 2008228433 A | 25-09-2008 |
| | | US 2008224671 A1 | 18-09-2008 |

EPO FORM P0461

Für nähere Einzelheiten zu diesem Anhang : siehe Amtsblatt des Europäischen Patentamts, Nr.12/82